# EUROPEAN PATENT SPECIFICATION

(11) **EP 3 724 010 B1**
(45) Date of publication and mention of the grant of the patent: **05.01.2022**
(21) Application number: 18799521.2
(22) Date of filing: 06.11.2018
(51) Int. Cl.: B60C 23/00, B60C 23/16

(54) **TYRE INFLATION PRESSURE CONTROL SYSTEM**
DRUCKSTEUERUNGSSYSTEM ZUM REIFENAUFPUMPEN
SYSTÈME DE COMMANDE DE PRESSION DE GONFLAGE DE PNEU

(30) Priority: 13.12.2017 GB 201720747
(43) Date of publication of application: 21.10.2020
(73) Proprietor: AGCO International GmbH, 8212 Neuhausen am Rheinfall (CH)
(72) Inventor: SODERMANNS, Felix, 87616 Marktoberdorf (DE)
(74) Representative: AGCO Intellectual Property Department
(86) International application number: PCT/EP2018/080293
(87) International publication number: WO 2019/115092

(56) References cited:
- EP-A1- 3 127 721
- DE-T5-112005 003 020
- US-A1- 2005 081 973

## Description

The present invention relates to a tyre inflation pressure control system comprising a vehicle wheel having first and second fluid chambers, suitably provided by a rim with a tyre mounted thereon and an air reservoir respectively, with the system further comprising valve arrangements for controllably supplying pressurised fluid to the chambers.

The inflation pressure of vehicle tyres is known to be a contributory factor in the tyre wear, the grip provided by the tyre and the fuel consumption of the vehicle. By reducing the pressure of the tyre, the contact surface with the ground is increased thereby improving the grip which allows a greater power to be transmitted between the vehicle and the ground. This is particularly advantageous in slippery conditions caused by ice or mud for example. Furthermore, when utility vehicles such as tractors operate in wet fields, the power which can be transmitted to the ground is limited and this can be increased by reducing the tyre pressure.

However, an increase in contact surface results in an increase in tyre wear and, as is particularly apparent on hard surfaces at speed, an increase in fuel consumption. Therefore it is recognised that optimum performance of the vehicle is achieved with different tyre inflation pressures for different operating conditions. This has led to the development of automatic inflation and deflation arrangements, generally called tyre pressure control systems (abbreviated as TPCS) which allow the tyre inflation pressure to be changed during operation to optimise the driving characteristics described above. The major challenge of these tyre pressure control systems today is the tyre filing time (time to adjust the pressure from a lower level e.g. 0.8 bar to a higher pressure level, e.g. 2.5 bar) which is mainly a time where the tractor is not productive. For some agricultural applications, e.g. when the tractor is operated strictly on the field for ploughing, the tyre pressure is only changed once, so tyre filling time is not that critical. However for other applications e.g. for slurry transport and application, the tractor frequently changes from field to road operation so that the tyre pressure is changed often. In this case, the tyre filling time has negative impact on overall operating time. To address the issue, different systems are known:
German Utility Model DE 29718420 U1 describes a tyre pressure control system wherein a wheel comprises an integrated compressed air reservoir located on the rim and surrounded by the tyre. Air is transferred from the reservoir to the tyre by means of a valve so as to inflate the tyre when required. The tyre is deflated via the same valve by transferring air to the environment. A control device is also located between the rim and the tyre and serves to control the valve means thereby inflating and deflating the tyre. The tyre pressure is maintained at a set point by the control device automatically activating the valve means in response to a measured distance between the rim and the tyre. The disclosed system does not allow active control of the tyre pressure and serves merely to maintain the pressure at a predetermined value.

United States patent application published as US-2005/0081973 describes a wheel assembly having a tyre mounted upon a rim. A reservoir disposed on the wheel stores gas under pressure for inflating the tyre. A solenoid valve provides a connection between the reservoir and the closed space of the tyre for inflating the tyre. A further solenoid valve provides a connection between the closed space and the atmosphere for deflating the tyre. A data processor which does not rotate with the rim communicates with a controller which does rotate with the rim. The controller feeds electrical signals to the solenoid valves via wireless communication to make them switch. While this system offers the major advantage that the tyre inflation can be provided by using a pre-filled reservoir to reduce the tyre filing time, there is no detail about how the solenoid valves are supplied with electric energy to move the solenoid sliders. In one embodiment, the signals are transferred from chassis to wheel via inductive feedthrough which may also provide the transfer of electric energy. However, inductive feedthrough arrangements are critical in terms of electromagnetic compatibility and require installation places and additional efforts, disabling the use of standard rims.

The present applicants' European patent EP-B-3038845 describes a wheel assembly having a tyre mounted upon a rim wherein a pneumatic valve is provided on the rim which is connected to a valve arrangement on the chassis via a control line and a supply line. The pneumatic valve on the rim is solely provided to open and close the connection of the tyre interior to the supply line. The system is not provided with a reservoir on the tyre so that the tyre filling time is high. However, the system is cheap in terms of the components installed on the rim and may be suitable for many agricultural applications.

The present applicants' European patent EP-B-2196336 describes a tyre pressure control system wherein a wheel comprises an integrated compressed air reservoir located on the rim and surrounded by the tyre. The control signal is transferred wirelessly while the energy supply for the solenoid valve is provided by batteries. Batteries must be seen as a critical component in terms of durability under extreme temperature conditions, and may fully discharge during operation which would disable usage of the TPCS.

International patent application publication No. WO2006061479 A1 describes a tyre pressure control system wherein a wheel comprises an integrated compressed air reservoir located on the rim and surrounded by the tyre. A wheel mounted pneumatic valve arrangement is fluidly connected with a further valve arrangement connectable to a source of pressurised air remote from the wheel by a single fluid connection. The wheel mounted valve arrangement is operably controlled by varying the pressure in the fluid connection to selectively connect the fluid connection with the compressed air reservoir or the interior of the tyre such that the reservoir can be charged and/or the tyre inflated by means of pressurised air supplied through the single fluid connection. The valve arrangement on the wheel is also operable to connect the reservoir to the interior of the tyre so that the tyre can be inflated from the reservoir. The use of a single fluid connection which acts both to control operation of the wheel mounted valve arrangement and as a supply of pressurised air for the reservoir and the interior of the tyre limits the flexibility of the system and requires that the components of the valve be capable of withstanding the pressure to which the reservoir is charged and the tyre inflated.

In accordance with a first aspect of the invention there is provided a tyre inflation pressure control system comprising:
a vehicle wheel providing a first fluid chamber and second fluid chamber;
a first valve arrangement installed remote from the wheel and connectable to a pressurised fluid source;
a second valve arrangement which is connected to the first valve arrangement by means of a first fluid connection, wherein the second valve arrangement is controllably operable to connect the first fluid connection to said first fluid chamber and said second fluid chamber on the vehicle wheel;
characterised in that the second valve arrangement is further connected to the first valve arrangement by a second fluid connection, wherein controlled variation of fluid pressure in the second fluid connection and first fluid connection is provided by the first valve arrangement to control said second valve arrangement for operating said tyre pressure control system in at least two operational modes:
   - a first mode, in which the second fluid chamber is connected to first valve; and
   - a second mode, in which the first fluid chamber is connected to the second fluid chamber.

The applicant has recognized the above-mentioned problems with known solutions and has developed a system which uses the simple approach of EP-B-3038845 (two line supply to wheel, no wireless transfer required, no electric energy on the wheels required) and the fast filing time of a system wherein the tyre is provided with a second reservoir.

As a further advantage, the invention enables the manufacturer to offer both systems with no design difference in terms of air supply provided on the chassis. So a customer may decide to take the cheaper, but slower system or the more expensive and faster system even as an after sales upgrade.

With the second valve arrangement (which may be mounted on the wheel) being controlled by pressure variation in the first and second fluid connections, a two-line control system is provided for charging an air reservoir (second fluid chamber) on a wheel, and for inflating a tyre (first fluid chamber) from the reservoir. This is achieved without the use of electrical control components on the wheel.

In the tyre inflation pressure control system, the controlled variation of fluid pressure in the second fluid connection and first fluid connection provided by the first valve arrangement to control said second valve arrangement preferably further provides a third operating mode in which the first fluid chamber is connected to the first valve arrangement.

Also in accordance with the present invention there is provided a utility vehicle comprising a tyre inflation pressure control system as recited above.

Further features of the system are recited in the attached claims, to which attention is now directed, and the disclosures of which are incorporated herein by reference.

Further advantages of the invention will become apparent from reading the following description of specific embodiments with reference to the appended drawings in which:-
Figure 1 is a representation of a utility vehicle, in the form of a tractor, suitably provided with a tyre pressure control system embodying the present invention;
Figure 2 is a circuit diagram of a tyre pressure control system embodying the present invention;
Figures 3.1 - 3.8 are circuit diagram segments illustrating the operation of the system of Figure 2; and
Figures 4.1 - 4.3 illustrate a test method for the system of Figure 2.

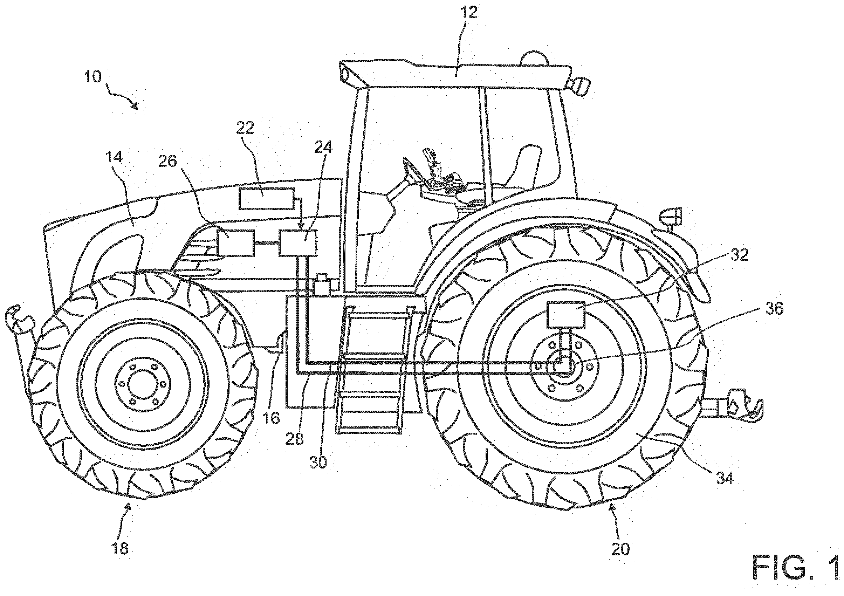

Referring to Figure 1, a utility vehicle in the form of a tractor 10 is shown having a cab 12 and an engine compartment 14. A chassis 16 which is partly visible connects a front wheel suspension and steering assembly (indicated generally at 18) and a rear axle assembly (indicated generally at 20). A vehicle control system 22 controls various functions of the vehicle, including operation of a first chassis-mounted valve arrangement providing an TPCS air supply 24 which is connected to the tractor air supply system 26. The tractor air supply system 26 includes a compressor (driven by the vehicle engine), an air dryer, a protection valve means and a reservoir to supply air to various consumers on the tractor 10, for example, the tractor braking system, and a trailer braking system. From the TPCS air supply 24, respective supply and control fluid lines 28, 30 connect to a second valve arrangement (hereinafter referred to as a pilot control valve manifold PVM) 32 on each of the rear wheels 34 of the vehicle 10.

There are various options for connecting the TPCS air supply 24 to the PVM 32 on the rotating wheel 34. A preferred option is by the use of a radial feedthrough 36 comprised of fluid channels running along the axle on which the rear wheel is mounted. An example of such a rotary feedthrough is described in the present applicants' European patent EP-B-3038845.

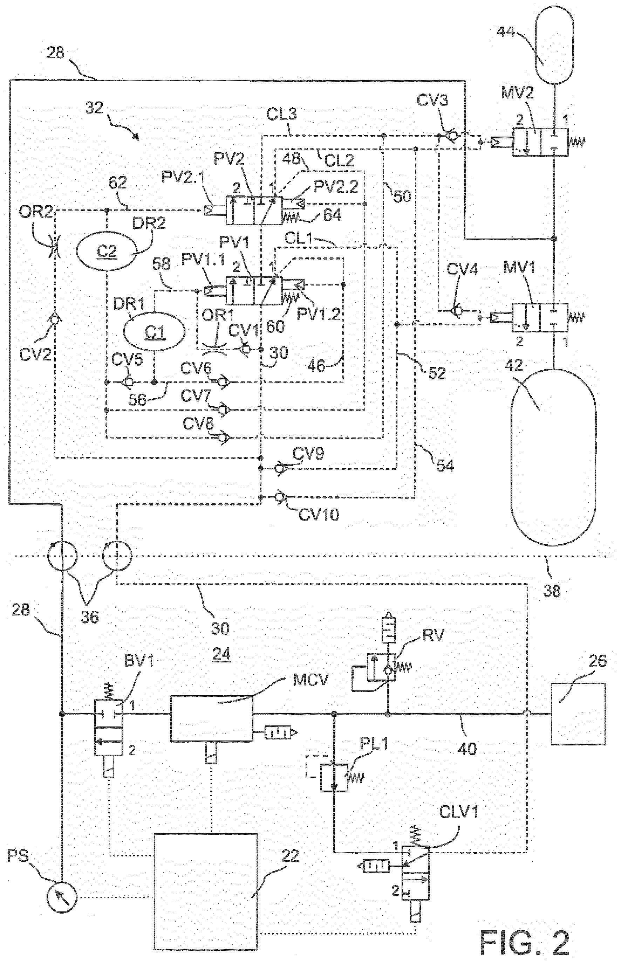

Figure 2 is a circuit diagram of the tyre pressure control system (TPCS) for the vehicle 10 of Figure 1. Those features shown below dotted line 38 comprise the chassis-mounted components including TPCS air supply 24 and tractor air supply system 26, whilst those features shown above line 38 comprise the wheel-mounted components including PVM 32. Whilst shown and described with reference to only a single wheel, it will be understood that the arrangement will be replicated for two or four wheels of the vehicle. Furthermore, Figure 2 represents the circuit diagram including separate valves. These valves may be single functional units connectable via respective lines or may be provided by one or more valve manifolds with integrated valve inserts and bores forming the connecting lines.

The function of the TPCS air supply 24 is now explained:
Under control of the control system 22, a valve manifold MCV is connectable to the output of the tractor air supply system 26 (on supply line 40). The output from valve manifold MCV via two-port two-position control valve BV1 provides pressurised air to the TPCS on supply line 28. A pressure relief valve RV is connected to vent to atmosphere at any over-pressure on line 40. Pressure limit valve PL1 reduces the pressure to about 5 bar (to enable the use of smaller components connected to main control line 30 while the main supply line 28 may be supplied with the same or higher pressure, say 5 to 8 bar) and connects line 40 to an input of three-port two-position solenoid control valve CLV1. The control valve CLV1 is spring-biased to connect line 40 and the output from pressure limit valve PL1 to the control line 30: on application of a current (current feed) coming from control system 22, solenoid of control valve CLV1 is moved against the spring force to a second position in which control line 30 is connected to line 40. The circuit for TPCS air supply 24 shown in Figure 2 is a simplified representation to depict the basic functionality. Valve manifold MCV, two-port two-position control valve BV1 and control valve CLV1 may not be solenoid controlled as described above but may be pneumatically controlled with upstream solenoid pilot control valves such as described in the present applicants' European patent EP-B-3038845.

Turning now to the components on the wheel, a first fluid chamber 42 is provided by the interior of the tyre, which chamber is connectable to the supply line 28 via a first main (lock) valve MV1. A second fluid chamber 44 provides a tyre reservoir, which chamber is connectable to the supply line 28 via a second main (lock) valve MV2. The second fluid chamber 44 may be a pressure vessel attached to the body of the wheel, or it may be in the form of an annular chamber around the rim of the wheel within the tyre interior in a so-called tyre-in-tyre arrangement. In dependence on pressure in the control line 30, the PVM 32 is configured to selectively operate the main valves MV1, MV2 (in a manner described below) to connect the first or second chambers 42, 44 to the supply line 28, or to each other such as to inflate the tyre interior from the tyre reservoir. Furthermore, main valves MV1, MV2 are also operated to measure the pressure in tyre interior or the tyre reservoir and to pressurize supply line 28 to ensure proper sealing contact in rotary feedthrough 36 prior to any inflation or deflation, as described in the present applicants' European patent EP-B-3038845.

Within the PVM 32, the control line 30 (hereinafter referred to as the main control line) is connected to the input of a first three-port two-position pressure control valve PV1. A first output of valve PV1 is connected via a control line CL1 to the actuator of main valve MV1 in opposition to a spring force of valve MV1 set to typically 4 bar. This means that when a pressure exceeding 4 bar is present on line CL1, main valve MV1 will move to connect the first chamber 42 to the supply line 28. The pressure control valve PV1 is spring-biased to the position in which the input is connected to the first output. The first output of pressure control valve PV1 is also connected via line 46 to a pressure actuator PV1.2 of valve PV1 in support of the spring, such that when control line CL1 is pressurised, valve PV1 is locked in position 1.

The first output from pressure control valve PV1 on line 46 is further connected via a check valve CV6 to the input of pressure chamber C1 provided by pressure delay valve DR1. The output of pressure chamber C1 is connected to a pressure actuator PV1.1 of valve PV1 (acting in opposition to PV1.2) and also, via a flow restriction orifice OR1 and check valve CLV1, back to main control line 30. As will be understood, the pressure delay valve DR1 comprises a chamber that passes through applied pressure and discharges that pressure through flow restriction orifice OR1 and check valve CLV1 when the control line 30 is not pressurized; a suitable configuration for pressure chamber C1 in this case is that the pressure is discharged completely 2 seconds after the control line 30 is connected to ambient. In other words, the pressure on pressure actuator PV1.1 of valve PV1 is kept for two seconds after the control line is discharged to ambient. Due to the installation of the chamber C1 as shown in Figure 2, the chamber C1 instantly fills when control line 30 is pressurized as the volume of chamber C1 is relatively small compared to the volume supplied in control line 30. In contrast to that, when the control line 30 is discharged, the air must pass orifice OR1 providing a time delay regarding the discharging of chamber C1 and thereby the connected lines and pressure actuator PV1.1 Depending on the volume of chamber C1 and the reduction in orifice OR1, this time (delay) may be adapted.

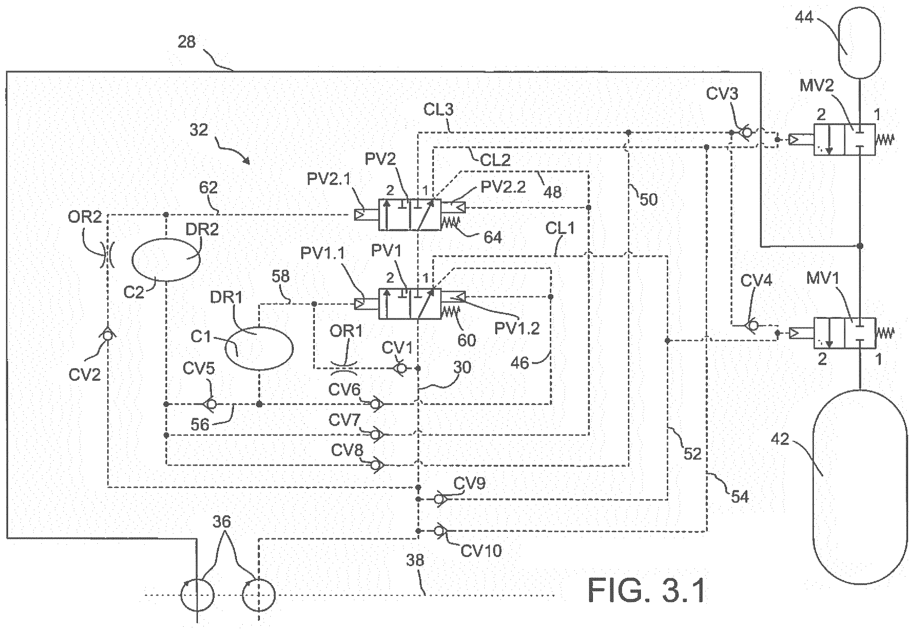

A second position of pressure control valve PV1 connects the input (main control line 30) to the input of a second pressure control valve PV2. Second pressure control valve PV2 is spring-biased to a position (as shown) in which the input is connected to a first output from which a control line CL2 delivers the input pressure to actuate the second main valve MV2 and thereby connect the second chamber 44 to the supply line 28. The detailed function of pressure control valve PV1 in combination with the pressure chamber C1, flow restriction orifice OR1 and check valve CLV1 is explained below with reference to Figures 3.1 to 3.8.

As with the first pressure control valve, the first output of the second pressure control valve PV2 is connected (via a line 48) to an actuator PV2.2 of the second control valve acting together with the spring bias to lock the second pressure control valve in position when in position 1. The output on line 48 is further connected via a control valve CV7 to the input of a further pressure chamber C2 provided by a second pressure delay valve DR2. The output of pressure chamber C2 is connected to a pressure actuator PV2.1 of valve PV2 (acting in opposition to PV2.2) and also, via a flow restriction orifice OR2 and check valve CV2, back to main control line 30. As before, a suitable configuration for pressure chamber C2 in this case is that the pressure is discharged completely 2 seconds after the control line 30 is connected to ambient. In other words, the pressure on pressure actuator PV2.1 of valve PV2 is kept for two seconds after the control line is discharged to ambient.

Due to the installation of the chamber C2 as shown in Figure 2, the chamber C2 instantly fills when control line 30 is pressurized as the volume of chamber C2 is relatively small compared to the volume supplied in control line 30. In contrast to that, when the control line 30 is discharged, the air must pass orifice OR2 providing a time delay regarding the discharging of chamber C2 and thereby the connected lines and pressure actuator PV2.1 Depending on the volume of chamber C2 and the reduction in orifice OR2, this time (delay) may be adapted. The detailed function of pressure control valve PV2 in combination with the pressure chamber C2, flow restriction orifice OR2 and check valve CLV2 is explained below with reference to Figures 3.1 to 3.8.

A second position of pressure control valve PV2, connects the input (from main control line 30 when connected via PV1) to a third PVM control line CL3 which delivers the input main control line pressure, via respective check valves CV4, CV3, to actuate both the first and second main valves MV1, MV2 and thereby connect the first and second fluid chambers 42, 44 to each other to charge the tyre inner space (fluid chamber 42) from the reservoir (fluid chamber 44).

A further line 50 connects control line CL3 (between PV2 and CV3) via a check valve CV8 to the input of pressure chamber C2. A further line 52 connects control line CL1 (between PV1 and MV1) via a check valve CV9 to the main control line 30. A further line 54 connects control line CL2 (between PV2 and MV2) via a check valve CV10 to the main control line 30. A further line 56 connects the input of pressure chamber C2 via a check valve CV5 to the input of pressure chamber C1.

Figures 3.1 to 3.8 depict the functionality of the PVM 32 which is mainly to supply the chambers 42, 44. Bold lines in the figures indicate those fluid lines under pressure whereby the supply line may show more than one operating condition in the respective Figure.

Figure 3.1 shows the system in an initial state, with no pressure in the control line 30 and the first and second main valves MV1, MV2 closed to isolate the first and second fluid chambers 42, 44. In this state, applying/removing pressure on the supply line 28 acts to pressurise/depressurise fluid seals in the rotary feedthrough 36. During pressurizing the seals, leakages may be detected by monitoring pressure in the supply line 28 by means of pressure sensor PS shown in Figure 2.

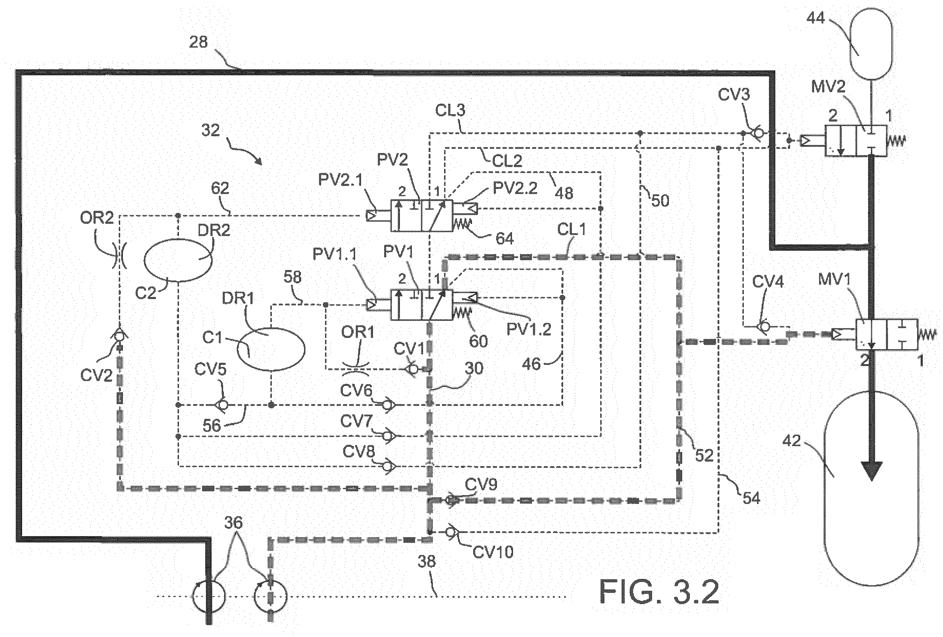

In Figure 3.2, the main control line 30 is pressurised. With pressure control valve PV1 in its first position, control line CL1 is pressurised causing actuation of main valve MV1 which connects the tyre interior (chamber 42) to the supply line 28. In this state, the TPCS can inflate/deflate the tyre interior as well as measure the pressure in the tyre interior via main supply line 28 as indicated with the bold line.

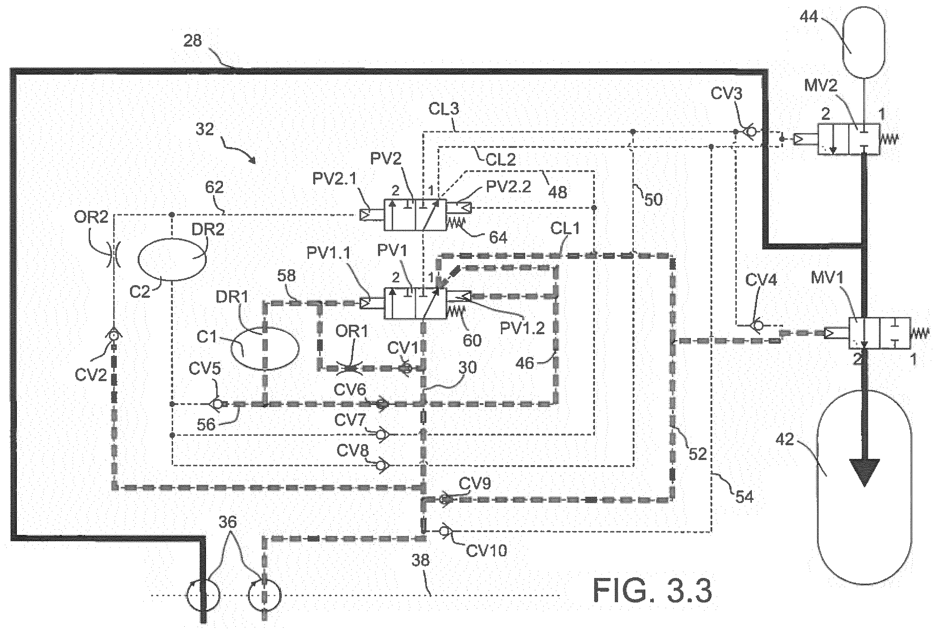

As shown in Figure 3.3, with the main control line 30 pressurised and with pressure control valve PV1 in its first position, pressure is also applied on line 46 and from there to pressure actuator PV1.2. The pressure on line 46 is also applied (via check valve CV6and pressure chamber C1) on line 58 and pressure actuator PV1.1 but the pressure on pressure actuator PV1.1 is rising with the filling of chamber C1. After the chamber C1 has filled completely, full pressure is applied on pressure actuator PV1.1. However, the pressure applied on pressure actuator PV1.2 and the additional force of spring 60 keeps pressure control valve PV1 in the shown position 1 against the pressure on pressure actuator PV1.1. In this state, the TPCS can still inflate/deflate the tyre interior as well as measure the pressure in the tyre interior via main supply line 28 as indicated with the bold line.

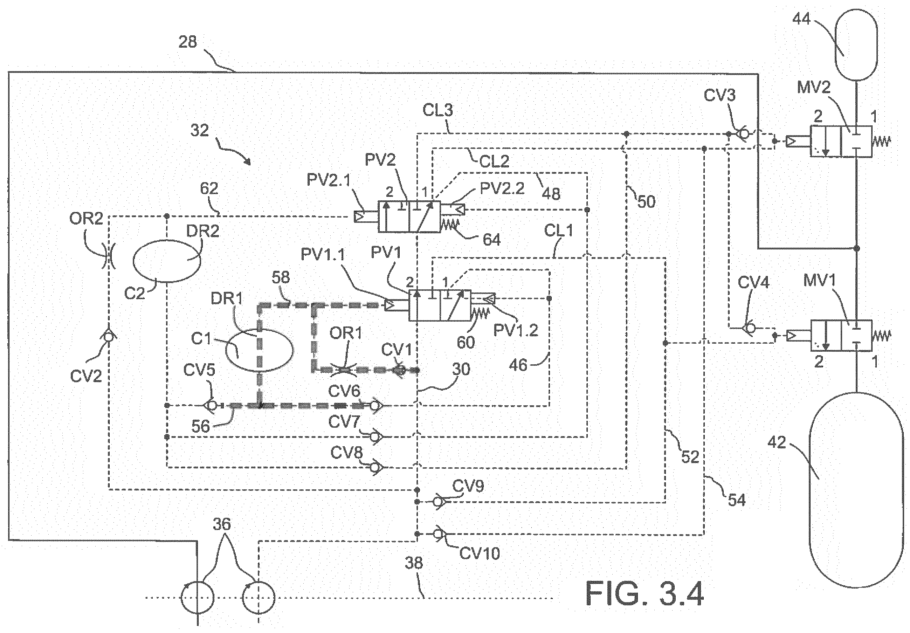

In Figure 3.4 control line 30 is discharged to ambient which drops the pressure on control line CL1 allowing main valve MV1 to close and isolate chamber 42. The pressure in chamber C1 remains thereby pressure control valve PV1 is moved to its second position by the residual pressure from chamber C1 on line 58 and pressure actuator PV1.1 overcoming the force of the spring 60 of PV1 (as pressure actuator PV1.2 is not pressurized). In this position of PV1, the input (control line 30) is connected to the input of the second pressure control valve PV2. After a certain time, enough of the pressure in chamber C1 would be discharged via the orifice OR1 for the force of the spring 60 to overcome the residual pressure on line 58 and pressure actuator PV1.1 and return the first pressure control valve PV1 to its first position.

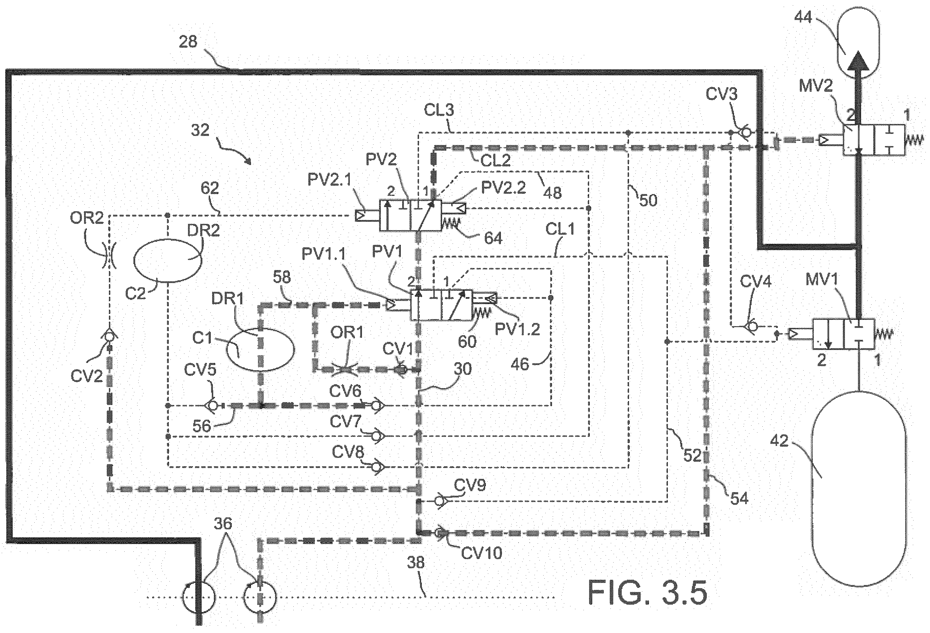

In Figure 3.5, the main control line 30 is again pressurised prior to the chamber C1 being completely discharged so that the pressure control valve PV1 is still in its second position Due to the design of pressure control valve PV1, line 46 is not connected to line 30 when in second position. As a consequence pressure actuator PV1.2 is not pressurized and the pressure applied on pressure actuator PV1.1 can keep first pressure control valve PV1 in its second position. With the first pressure control valve PV1 still in its second position, and the second pressure control valve PV2 in its first position, control line CL2 is pressurised causing actuation of the second main valve MV2 which connects the tyre reservoir (chamber 44) to the supply line 28. In this state, the TPCS can pressurise the tyre reservoir (or discharge/deflate it for maintenance purposes) as well as measure the pressure in the tyre reservoir via main supply line 28 as indicated with the bold line.

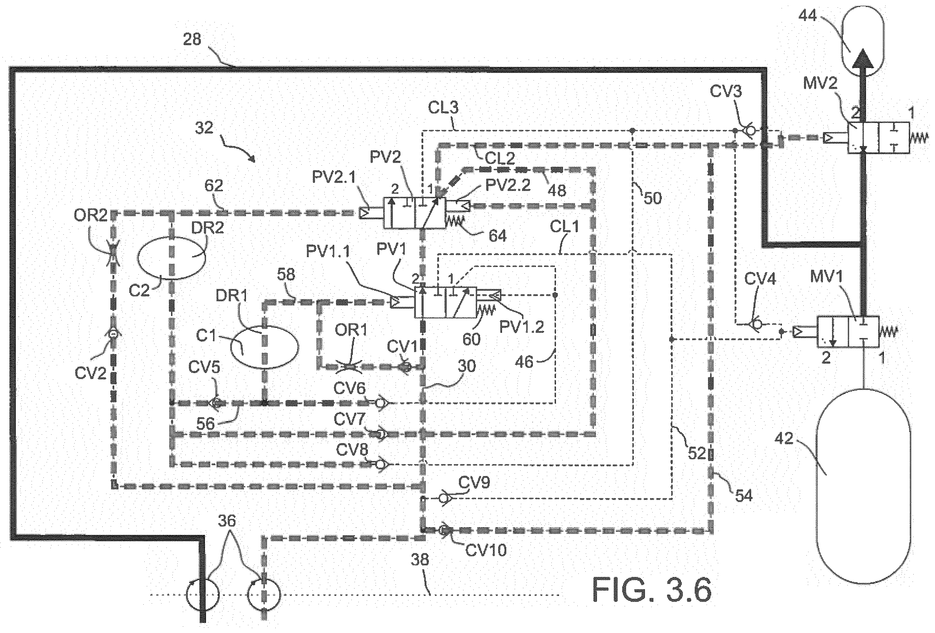

As shown in Figure 3.6 with the main control line 30 pressurised and with pressure control valve PV2 in its first position, pressure is also applied on line 48 and from there to pressure actuator PV2.2The pressure on line 48 is also applied (via check valve CV7 and pressure chamber C2) on line 62 and pressure actuator PV2.1. However, the pressure applied on pressure actuator PV2.2 and the additional force of spring 64 keeps pressure control valve PV2 in the shown position 1 against the pressure on pressure actuator PV2.1.

As line 58 is also charged via line 56, and pressure chamber C1 the pressure actuator PV1.1 is pressurized via check valves CV5 and CV7 connecting the input of chamber C1 to line 48 and keeps first pressure control valve PV1 in its second position. In this state, the TPCS can still pressurise the tyre reservoir (or discharge/deflate it for maintenance purposes) as well as measure the pressure in the tyre reservoir via main supply line 28 as indicated with the bold line.

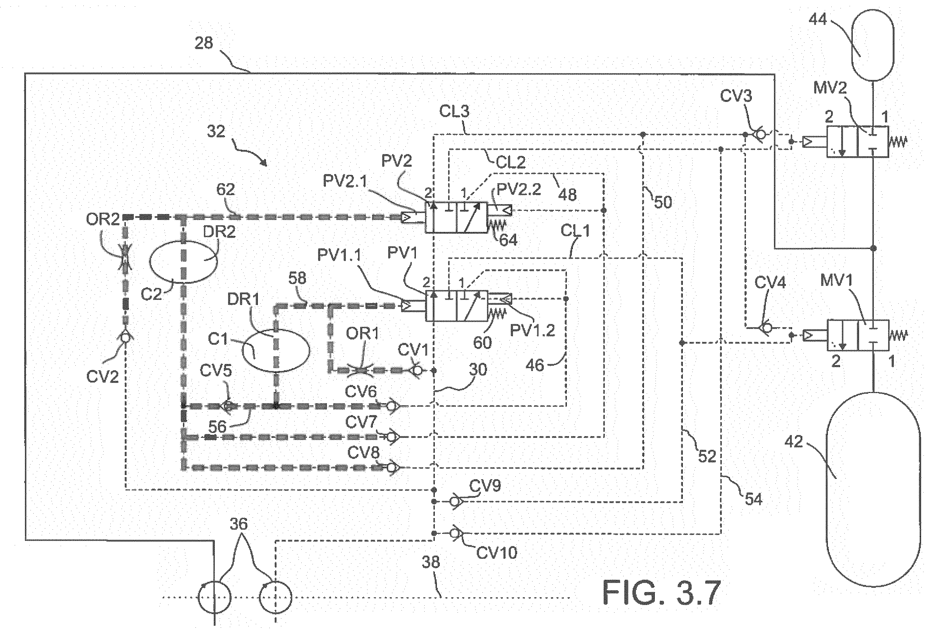

In Figure 3.7 control line 30 is discharged to ambient which drops the pressure on control line CL2 allowing main valve MV2 to close and isolate chamber 44. The pressure in chamber C2 remains, thereby pressure control valve PV2 is moved to its second position by the residual pressure from chamber C2 on line 62 overcoming the force of the spring 64 of PV2 (as pressure actuator PV2.2 is not pressurized). In this position of PV2, the input (control line 30 via PV1) is connected to the third control line CL3. After a certain time, enough of the pressure in chamber C1 would be discharged via the orifice OR1 for the force of the spring 60 to overcome the residual pressure on line 58 and return the first pressure control valve PV1 to its first position, and enough of the pressure in chamber C2 would have discharged via the orifice OR2 for the force of the spring 64 to overcome the residual pressure on line 62 and return the second pressure control valve PV2 to its first position (returning the PVM 32 to the initial configuration of Fig. 3.1).

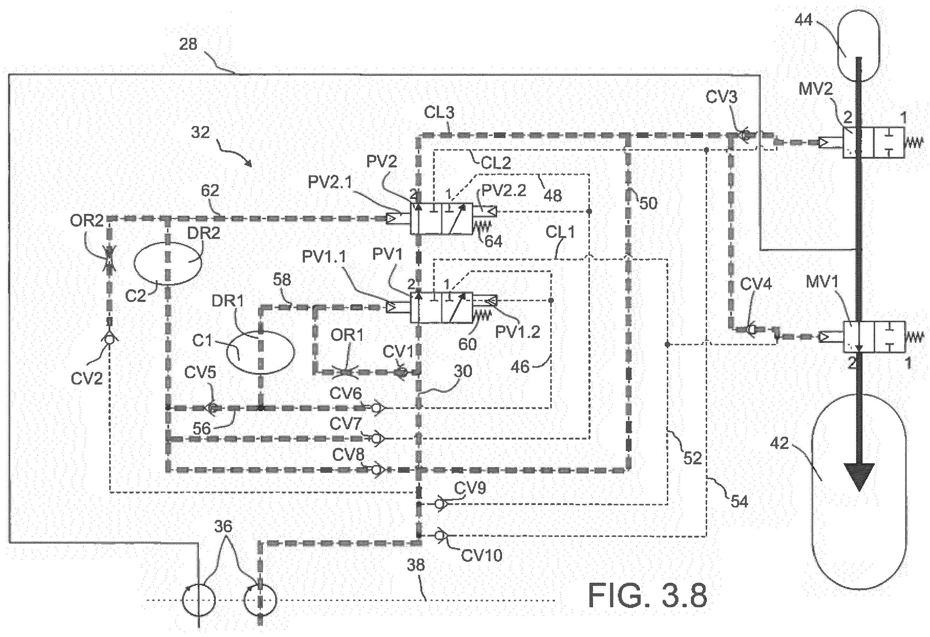

In Figure 3.8, the main control line 30 is again pressurised prior to the chamber C1 and C2 being completely discharged. With the first and second pressure control valves PV1, PV2 still in their respective second positions, control line CL3 is pressurised causing actuation of both the first and second main valves MV1, MV2 which connects the tyre reservoir (chamber 44) to the tyre interior (chamber 42). In this state, the tyre interior may be inflated (or further inflated) from the reservoir. In this state, pressure is also applied on line 50 (via check valve CV8) to the input of pressure chamber C2, which starts to charge. Pressure chamber C1 is also charged via line 56 and check valves CV5 and CV8 connecting the input of chamber C1 to line 50.

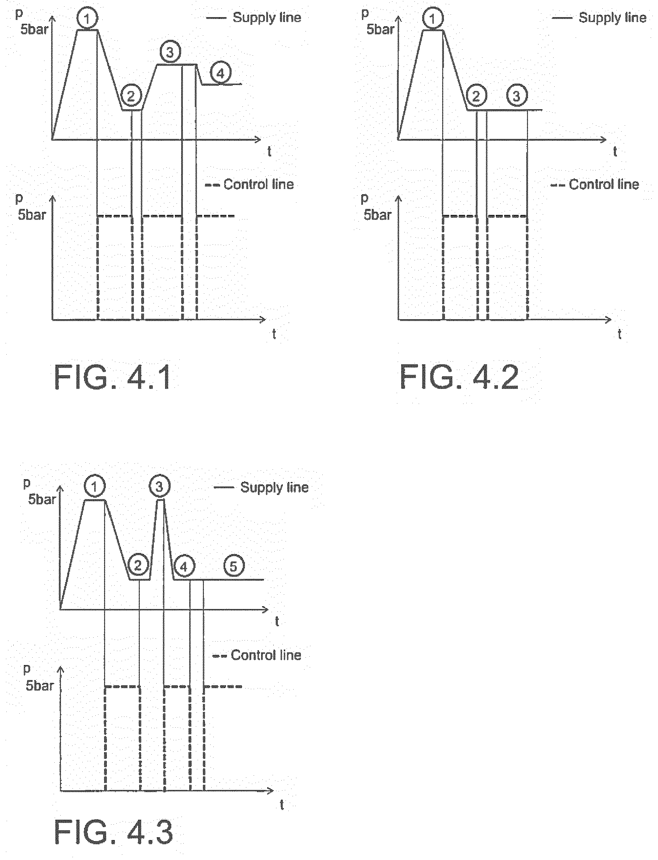

The correct operating of the first and second main valves MV1, MV2 (and hence the proper functioning of PVM 32) may be determined from charging the supply line 28 and then monitoring supply line pressure as a sequence of operations are performed, as shown in Figures 4.1 - 4.3. As will become apparent, different methods are required depending on whether the pressure in the two chambers 42, 44 is different or equal.

Starting with Figure 4.1, the upper trace shows the pressure in supply line 28 and the lower shows the pressure in control line 30 as the following steps 1-4 (also denoted on the upper trace) are performed.
1. Supply line 28 is charged with air to a predetermined pressure (e.g. 5 bar) to ensure proper contact.
2. The first main control valve MV1 is opened. The pressure in supply line 28 decreases to the pressure level of the tyre interior (chamber 42).
3. The first main control valve MV1 is closed and the second main control valve MV2 is opened. The pressure in supply line 28 increases to the pressure level of the tyre reservoir (chamber 44).
4. Both main control valves MV1 and MV2 are opened. The pressure in the two chambers 42, 44 is balanced (that is to say the pressure line should show a pressure level between that detected at steps 2 and 3 if the system is working correctly.

For the purposes of illustration, Figure 4.2 shows why the above technique cannot be used when the pressure in the two chambers 42, 44 is equal.
1. As above, supply line 28 is charged with air to a predetermined pressure (e.g. 5 bar) to ensure proper contact.
2. As above, the first main control valve MV1 is opened. The pressure in supply line 28 decreases to the pressure level of the tyre interior (chamber 42).
3. As above, the first main control valve MV1 is closed and the second main control valve MV2 is opened. However, because the pressure in the two chambers is equal, the pressure in supply line 28 does not change. Without change, the system cannot check if the main control valve MV2 has really been opened, and so the test fails.

Figure 4.3 shows a modified technique applied when the tyre interior and reserve pressures are equal.
1. As above, supply line 28 is charged with air to a predetermined pressure (e.g. 5 bar) to ensure proper contact.
2. As above, the first main control valve MV1 is opened. The pressure in supply line 28 decreases to the pressure level of the tyre interior (chamber 42).
3. First main control valve MV1 is closed and the pressure in supply line SL is raised to 5 bar. This pressure level can only be reached if MV1 and MV2 were closed prior to the test.
4. MV2 is opened. The pressure in supply line decreases to pressure level of tyre reservoir (chamber 44).
5. MV1 and MV2 are opened. As the pressure in TI and TR is balanced, this time there should be no change in pressure in the supply line 28 to indicate a correct operation.

In the foregoing the applicants have described a tyre inflation pressure control system includes a vehicle wheel having a tyre interior providing a first fluid chamber 42 and an air reservoir providing a second fluid chamber 44. A first valve arrangement 24 is installed remote from the wheel and is connectable to a pressurised fluid source 26. A second valve arrangement 32, suitably mounted on the wheel, is connected to the first valve arrangement 24 by means of first and second fluid connections 28, 30. The second valve arrangement 32 is controllably operable to connect the first fluid connection 28 to either fluid chamber 42, 44. Controlled variation of fluid pressure in and between the fluid connections 28, 30 is provided by the first valve arrangement 24 to control said second valve arrangement 32 for operating the tyre pressure control system to connect the second fluid chamber 44 to the first valve arrangement 24, and to connect the first and second fluid chambers 42, 44.

From reading of the above embodiments , other modifications will be apparent to those skilled in the art. Such modifications may involve other features which are already known in the field of vehicle air supply and tyre inflation systems and component parts therefore and which may be used in addition to features of the invention defined in the appended claims.

## Claims

1. A tyre inflation pressure control system comprising:
a vehicle wheel providing a first fluid chamber (42) and second fluid chamber (44);
a first valve arrangement (24) installed remote from the wheel and connectable to a pressurised fluid source (26);
a second valve arrangement (32) which is connected to the first valve arrangement (24) by means of a first fluid connection (28), wherein the second valve arrangement (32) is controllably operable to connect the first fluid connection (28) to said first fluid chamber (42) and said second fluid chamber (44) on the vehicle wheel;
**characterised in that** the second valve arrangement is further connected with the first valve arrangement by a second fluid connection, wherein controlled variation of fluid pressure in the second fluid connection (30) and first fluid connection (28) is provided by the first valve arrangement (24) to control said second valve arrangement (32) for operating said tyre pressure control system in at least two operational modes:
- a first mode, in which the second fluid chamber (44) is connected to first valve arrangement (24); and
- a second mode, in which the first fluid chamber (42) is connected to the second fluid chamber (44).

2. A tyre inflation pressure control system as claimed in claim 1, wherein the controlled variation of fluid pressure in the second fluid connection (30) and first fluid connection (28) provided by the first valve arrangement (24) to control said second valve arrangement (32) is further provided to produce a third operating mode in which the first fluid chamber (42) is connected to the first valve arrangement (24).

3. A tyre inflation pressure control system as claimed in claim 1 or claim 2, wherein the second valve arrangement (32) includes a first pressure control valve (PV1) having a first operating position in which fluid pressure on an input activates a first main valve (MV1) connecting the first fluid chamber (42) to the first fluid connection (28).

4. A tyre inflation pressure control system as claimed in claim 3, wherein the second valve arrangement (32) includes a second pressure control valve (PV2) having a first operating position in which fluid pressure on an input activates a second main valve (MV2) connecting the second fluid chamber (44) to the first fluid connection (28).

5. A tyre inflation pressure control system as claimed in claim 4, wherein the input to the first pressure control valve (PV1) is connected to the second fluid connection (30), the first pressure control valve (PV1) having a second operating position in which fluid pressure on the input is passed to the input of the second pressure control valve (PV2), the second pressure control valve (PV2) having a second operating position in which fluid pressure on the input activates both first and second main valves (MV1, MV2) connecting the first and second fluid chambers (42, 44) to each other.

6. A tyre inflation pressure control system as claimed in claim 5, wherein each of the first and second pressure control valves (PV1, PV2) has its output in the first position connected to a respective delay valve (C1, C2) which, when charged, urges the respective pressure control valve (PV1, PV2) to its second position.

7. A tyre inflation pressure control system as claimed in any preceding claim, wherein the second valve arrangement (32) is mounted on the wheel (34).

8. A tyre inflation pressure control system as claimed in any preceding claim, wherein the wheel has a pneumatic tyre mounted on a rim portion of the wheel, and the first chamber (42) is defined by the rim and interior of the tyre.

9. A tyre inflation pressure control system as claimed in any preceding claim, wherein the second chamber (44) is a pressure reservoir vessel mounted on the wheel.

10. A tyre inflation pressure control system as claimed in claim 8, wherein the second chamber (44) is an inner tyre mounted on the wheel rim within the first chamber (42).

11. A utility vehicle (10) comprising a tyre inflation pressure control system as claimed in any preceding claim.

12. A utility vehicle (10) as claimed in claim 11, including a pressurised fluid source (26) and a chassis (16), wherein the first valve arrangement (24) is connected to the pressurised fluid source (16) and installed on the vehicle chassis (16).

## Patentansprüche

1. Reifenaufpump-Drucksteuer/-regelsystem, mit:
einem Fahrzeugrad, das eine erste Fluidkammer (42) und eine zweite Fluidkammer (44) bereitstellt;
einer ersten Ventilanordnung (24), die entfernt von dem Rad angeordnet und mit einer Druckfluidquelle (26) verbindbar ist;
einer zweiten Ventilanordnung (32), die mittels einer ersten Fluidverbindung (28) mit der ersten Ventilanordnung (24) verbunden ist, wobei die zweite Ventilanordnung (32) steuerbar/- regelbar betreibbar ist, um die erste Fluidverbindung (28) mit der ersten Fluidkammer (42) und der zweiten Fluidkammer (44) an dem Fahrzeugrad zu verbinden;
**dadurch gekennzeichnet, dass** die zweite Ventilanordnung weiterhin durch eine zweite Fluidverbindung mit der ersten Ventilanordnung verbunden ist, wobei durch die erste Ventilanordnung (24) eine gesteuerte/geregelte Veränderung des Fluiddrucks in der zweiten Fluidverbindung (30) und der ersten Fluidverbindung (28) bereitgestellt wird, um die zweite Ventilanordnung (32) zum Betreiben des Reifenaufpump-Drucksteuer/-regelsystems in mindestens den zwei folgenden Betriebsmodi zu steuern/regeln:
- einen ersten Modus, in dem die zweite Fluidkammer (44) mit der ersten Ventilanordnung (24) verbunden ist; und
- einen zweiten Modus, in dem die erste Fluidkammer (42) mit der zweiten Fluidkammer (44) verbunden ist.

2. Reifenaufpump-Drucksteuer/-regelsystem nach Anspruch 1, wobei die gesteuerte/geregelte Veränderung des Fluiddrucks in der zweiten Fluidverbindung (30) und der ersten Fluidverbindung (28), die durch die erste Ventilanordnung (24) zum Steuern/Regeln der zweiten Ventilanordnung (32) bereitgestellt wird, weiterhin bereitgestellt wird, um einen dritten Betriebsmodus zu erzeugen, in dem die erste Fluidkammer (42) mit der ersten Ventilanordnung (24) verbunden ist.

3. Reifenaufpump-Drucksteuer/-regelsystem nach Anspruch 1 oder 2, wobei die zweite Ventilanordnung (32) ein erstes Drucksteuer/-regelventil (PV1) aufweist, das eine erste Betriebsstellung besitzt, in der Fluiddruck an einem Eingang ein erstes Hauptventil (MV1) aktiviert, das die erste Fluidkammer (42) mit der zweiten Fluidverbindung (28) verbindet.

4. Reifenaufpump-Drucksteuer/-regelsystem nach Anspruch 3, wobei die zweite Ventilanordnung (32) ein zweites Drucksteuer/-regelventil (PV2) aufweist, das eine erste Betriebsstellung besitzt, in der Fluiddruck an einem Eingang ein zweites Hauptventil (MV2) aktiviert, das die zweite Fluidkammer (44) mit der ersten Fluidverbindung (28) verbindet.

5. Reifenaufpump-Drucksteuer/-regelsystem nach Anspruch 4, wobei der Eingang zu dem ersten Drucksteuer/-regelventil (PV1) mit der zweiten Fluidverbindung (30) verbunden ist, wobei das erste Drucksteuer/-regelventil (PV1) eine zweite Betriebsstellung besitzt, in der Fluiddruck an dem Eingang an das zweite Drucksteuer/-regelventil (PV2) weitergegeben wird, wobei das zweite Drucksteuer/-regelventil (PV2) eine zweite Betriebsstellung besitzt, in der Fluiddruck an dem Eingang das erste Hauptventil (MV1) und das zweite Hauptventil (MV2) aktiviert, die die erste Fluidkammer (42) und die zweite Fluidkammer (44) miteinander verbinden.

6. Reifenaufpump-Drucksteuer/-regelsystem nach Anspruch 5, wobei bei dem ersten Drucksteuer/-regelventil (PV1) und dem zweiten Drucksteuer/-regelventil (PV2) jeweils der Ausgang in der ersten Stellung mit einem entsprechenden Verzögerungsventil (C1, C2) verbunden ist, das bei Beaufschlagung das entsprechende Drucksteuer/-regelventil (PV1, PV2) in seine zweite Stellung zwingt.

7. Reifenaufpump-Drucksteuer/-regelsystem nach mindestens einem der vorhergehenden Ansprüche, wobei die zweite Ventilanordnung (32) an dem Rad (34) montiert ist

8. Reifenaufpump-Drucksteuer/-regelsystem nach mindestens einem der vorhergehenden Ansprüche, wobei das Rad einen auf einem Felgenbereich des Rads montierten pneumatischen Reifen aufweist und die erste Kammer (42) durch die Felge und den Innenraum des Reifens definiert ist.

9. Reifenaufpump-Drucksteuer/-regelsystem nach mindestens einem der vorhergehenden Ansprüche, wobei die zweite Kammer (44) ein an dem Rad montierter Druckreservoirbehälter ist.

10. Reifenaufpump-Drucksteuer/-regelsystem nach Anspruch 8, wobei die zweite Kammer (44) ein an der Radfelge in der ersten Kammer (42) montierter innerer Reifen ist.

11. Nutzfahrzeug (10) mit einem Reifenaufpump-Drucksteuer/-regelsystem nach mindestens einem der vorhergehenden Ansprüche.

12. Nutzfahrzeug (10) nach Anspruch 11, mit einer Druckfluidquelle (26) und einem Chassis (16), wobei die erste Ventilanordnung (24) mit der Druckfluidquelle (26) verbunden und an dem Chassis (16) angeordnet ist.

## Revendications

1. Dispositif de commande de pression de gonflage de pneu comprenant :
une roue de véhicule, formant un premier compartiment de fluide (42) et second compartiment de fluide (44) ;
un premier agencement de vanne (24) installé à distance de la roue et pouvant être raccordé à une source de fluide pressurisée (26) ;
un second agencement de vanne (32) qui est raccordé au premier agencement de vanne (24) au moyen d'une première liaison fluidique (28), dans lequel le second agencement de vanne (32) peut être utilisé de manière commandée afin de raccorder la première liaison fluidique (28) audit premier compartiment de fluide (42) et audit second compartiment de fluide (44) sur la roue de véhicule ;
**caractérisé en ce que** le second agencement de vanne est, en outre, raccordé au premier agencement de vanne par une seconde liaison fluidique, dans lequel une variation commandée de la pression de fluide sur la seconde liaison fluidique (30) et la première liaison fluidique (28) est produite par le premier agencement de vanne (24) afin de commander ledit second agencement de vanne (32) de manière à activer ledit dispositif de commande de pression de pneu dans au moins deux modes opérationnels :
un premier mode, dans lequel le second compartiment de fluide (44) est raccordé au premier agencement de vanne (24) ; et
un deuxième mode, dans lequel le premier compartiment de fluide (42) est raccordé au second compartiment de fluide (44).

2. Dispositif de commande de pression de gonflage de pneu selon la revendication 1, dans lequel la variation commandée de la pression de fluide sur la seconde liaison fluidique (30) et la première liaison fluidique (28) produite par le premier agencement de vanne (24) afin de commander ledit second agencement de vanne (32) est, en outre, produite afin d'obtenir un troisième mode opérationnel dans lequel le premier compartiment de fluide (42) est raccordé au premier agencement de vanne (24).

3. Dispositif de commande de pression de gonflage de pneu selon la revendication 1 ou 2, dans lequel le second agencement de vanne (32) comporte une première vanne de commande de pression (PV1) présentant une première position opérationnelle dans laquelle une pression de fluide sur une entrée active une première vanne principale (MV1) reliant le premier compartiment de fluide (42) à la première liaison fluidique (28).

4. Dispositif de commande de pression de gonflage de pneu selon la revendication 3, dans lequel le second agencement de vanne (32) comporte une seconde vanne de commande de pression (PV2) présentant une première position opérationnelle dans laquelle la pression de fluide sur une entrée active une seconde vanne principale (MV2) reliant le second compartiment de fluide (44) à la première liaison fluidique (28).

5. Dispositif de commande de pression de gonflage de pneu selon la revendication 4, dans lequel l'entrée de la première vanne de commande de pression (PV1) est raccordée à la seconde liaison fluidique (30), la première vanne de commande de pression (PV1) présentant une seconde position opérationnelle dans laquelle la pression de fluide sur l'entrée est transmise à l'entrée de la seconde vanne de commande de pression (PV2), la seconde vanne de commande de pression (PV2) présentant une seconde position opérationnelle dans laquelle la pression de fluide sur l'entrée active à la fois les première et seconde vannes principales (MV1, MV2) raccordant les premier et second compartiments de fluide (42, 44) entre eux.

6. Dispositif de commande de pression de gonflage de pneu selon la revendication 5, dans lequel la sortie de chacune des première et seconde vannes de commande de pression (PV1, PV2) dans la première position est raccordée à une vanne de temporisation (C1, C2) respective qui, une fois chargée, applique la vanne de commande de pression (PV1, PV2) respective dans sa seconde position.

7. Dispositif de commande de pression de gonflage de pneu selon l'une quelconque des revendications précédentes, dans lequel le second agencement de vanne (32) est monté sur la roue (34).

8. Dispositif de commande de pression de gonflage de pneu selon l'une quelconque des revendications précédentes, dans lequel la roue comporte un pneumatique monté sur une partie de jante de la roue, et le premier compartiment (42) est défini par la jante et l'intérieur du pneu.

9. Dispositif de commande de pression de gonflage de pneu selon l'une quelconque des revendications précédentes, dans lequel le second compartiment (44) est une cuve formant réservoir pressurisé montée sur la roue.

10. Dispositif de commande de pression de gonflage de pneu selon la revendication 8, dans lequel le second compartiment (44) est un pneu interne monté sur la jante de roue à l'intérieur du premier compartiment (42).

11. Véhicule utilitaire (10) comprenant un dispositif de commande de pression de gonflage de pneu selon l'une quelconque des revendications précédentes.

12. Véhicule utilitaire (10) selon la revendication 11, comportant une source de fluide pressurisée (26) et un châssis (16), dans lequel le premier agencement de vanne (24) est raccordé à la source de fluide pressurisée (16) et installé sur le châssis de véhicule (16).
